# EUROPEAN PATENT APPLICATION

(11) **EP 4 132 207 A1**
(43) Date of publication of application: **08.02.2023**
(21) Application number: 20929396.8
(22) Date of filing: 01.04.2020
(51) Int. Cl.: H04W 76/28

(54) **POWER SAVING METHOD AND APPARATUS FOR USER TERMINAL, AND COMMUNICATION DEVICE AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Gunzelmann, Rainer
(86) International application number: PCT/CN2020/082857
(87) International publication number: WO 2021/196102

(57) **Abstract**

Disclosed in the disclosure are a power saving method and apparatus for a user terminal, and a communication device and a storage medium, wherein same relate to the technical field of communications. The method is applied to a user terminal, and comprises: acquiring PDCCH skip period information, wherein the skip period information indicates a skip period, and within the skip period, a user terminal skips an active time in a first DRX cycle; and stopping the monitoring of a PDCCH within the skip period. In the disclosure, stopping the monitoring of a PDCCH within a skip period can effectively reduce the power consumption of a user terminal.

## Description

### TECHNICAL FIELD

The disclosure relates to the field of communication technologies, and in particular, to a method and an apparatus for power saving of a user equipment (UE), a communication device and a storage medium.

### BACKGROUND

In order to save power consumption of a user equipment (UE), for signal detection on a physical downlink control channel (PDCCH), a wake up service (WUS) mechanism and a discontinuous reception (DRX) mechanism are introduced. The DRX includes On Duration time and Opportunity for DRX time. On Duration is a listening duration in the DRX.

When the WUS mechanism is used together with the DRX mechanism, a WUS signal in the DRX scene is usually configured before the On Duration of the DRX, the entire On Duration is skipped in response to the WUS signal being not detected by the UE.

In some cases, WUS still has the problem of large power consumption. For example, in a scene short-cycle DRXs are intensively configured, there may still be a problem of large power consumption.

### SUMMARY

The embodiments of the disclosure provide a method and an apparatus for power saving of a user equipment (UE), a communication device and a storage medium. By indicating a skip period including active time of DRX to the UE, the UE is enabled to stop monitoring a PDCCH within the skip period. Therefore, the power consumption of the UE is effectively reduced. The technical solution is as follows:
According to an aspect of the disclosure, a method for power saving of a user equipment (UE) is provided, which is applied to the UE. The method includes: acquiring physical downlink control channel (PDCCH) skip period information, where the skip period information indicates a skip period, and the UE skips active time in a first discontinuous reception (DRX) cycle within the skip period; and stopping monitoring a PDCCH within the skip period.

According to another aspect of the disclosure, a method for power saving of a user equipment (UE) is provided, which is applied to a network device. The method includes: determining physical downlink control channel (PDCCH) skip period information for the UE, where the skip period information indicates a skip period; and the UE skips active time in a first discontinuous reception (DRX) cycle within the skip period; and sending the PDCCH skip period information to the UE.

According to another aspect of the disclosure, an apparatus for power saving of a user equipment (UE) is provided. The apparatus includes a first processing module. The first processing module is configured to acquire physical downlink control channel (PDCCH) skip period information, where the skip period information indicates a skip period, and the UE skips active time in a first discontinuous reception (DRX) cycle within the skip period; and stop monitoring a PDCCH within the skip period.

According to another aspect of the disclosure, an apparatus for power saving of a user equipment (UE) is provided. The apparatus includes a second processing module and a sending module. The second processing module is configured to determine physical downlink control channel (PDCCH) skip period information for the UE, where the skip period information indicates a skip period; and the UE skips active time in a first discontinuous reception (DRX) cycle within the skip period. The sending module is configured to send the PDCCH skip period information to the UE.

According to another aspect of the disclosure, a user equipment is provided. The user equipment includes: a processor, a transceiver connected to the processor, and a memory for storing instructions executable by the processor. When the processor is configured to load and execute the instructions, steps in the method for power saving of a user equipment is implemented according to the previous aspect at the user equipment side.

According to another aspect of the disclosure, a network device is provided. The network device includes: a processor, a transceiver connected to the processor, and a memory for storing instructions executable by the processor. When the processor is configured to load and execute the instructions, steps in the method for power saving of a user equipment is implemented according to the previous aspect at the network device side.

According to another aspect of the disclosure, a computer-readable storage medium have executable instructions stored. When the processor is configured to load and execute the instructions, the method for power saving of a user equipment is implemented according to the above described aspects.

The technical solutions according to the embodiments of the disclosure include at least the following beneficial effects.

The UE acquires the PDCCH skip period information, where the skip period information indicates the skip period, and stops monitoring the PDCCH within the skip period. The UE skips the active time in the first DRX cycle within the skip period, which effectively saves the power consumption of the UE.

### BRIEF DESCRIPTION OF THE DRAWINGS

In order to illustrate the technical solutions in the embodiments of the disclosure more clearly, the accompanying drawings used in the description of the embodiments are briefly introduced below. Obviously, the accompanying drawings in the following description are only some embodiments of the disclosure. For those skilled in the art, other drawings may also be obtained from these drawings without creative efforts.
FIG. 1 is a block diagram of a communication system according to an exemplary embodiment of the disclosure.
FIG. 2 is a flowchart of a method for power saving of a user equipment according to an exemplary embodiment of the disclosure.
FIG.3 is a schematic diagram of a DRX cycle according to an exemplary embodiment of the disclosure.
FIG. 4 is a schematic diagram of a DRX cycle according to another exemplary embodiment of the disclosure.
FIG. 5 is a schematic diagram of a DRX cycle according to another exemplary embodiment of the disclosure.
FIG. 6 is a schematic diagram of a DRX cycle according to another exemplary embodiment of the disclosure.
FIG. 7 is a schematic diagram of a method for power saving of a user equipment according to another exemplary embodiment of the disclosure.
FIG. 8 is a schematic diagram of a method for power saving of a user equipment according to another exemplary embodiment of the disclosure.
FIG. 9 is a schematic diagram of a method for power saving of a user equipment according to another exemplary embodiment of the disclosure.
FIG. 10 is a block diagram of an apparatus for power saving of a user equipment according to an exemplary embodiment of the disclosure.
FIG. 11 is a block diagram of an apparatus for power saving of a user equipment according to another exemplary embodiment of the disclosure.
FIG. 12 is a block diagram of a communication device according to an exemplary embodiment of the disclosure.

### DETAILED DESCRIPTION

In order to make the objectives, technical solutions and advantages of the disclosure clearer, the embodiments of the disclosure may be further described in detail below with reference to the accompanying drawings.

The terms involved in the disclosure are explained as follows.

DRX cycle: it is composed of "On Duration" and "Opportunity for DRX". During the "On Duration" time, the UE monitors and receives the PDCCH. During the "Opportunity for DRX" time, the UE does not receive the PDCCH to reduce power consumption.

On Duration Time: it is the time when the UE keeps awake after waking up from the DRX each time, the UE may search for the PDCCH within this period of time, that is, the UE may monitor the PDCCH within this period of time.

Inactivity Time: it is the time when the UE keeps active after the UE successfully decodes the PDCCH initially sent by a Hybrid Automatic Repeat reQuest (HARQ) when the UE is awake.

Active Time: it is the total time that the UE keeps awake after waking up from DRX. During this time period, the UE monitors the PDCCH, including all the states that cause the UE to be active, such as the "On Duration" when the DRX cycle starts, or receiving the initially transmitted PDCCH, or monitoring the retransmission, etc. In an example, the active time is defined as follows. When the DRX is configured, the active time includes: the On Duration time, the Inactivity Time, the Retransmission Time, and mac-Contention Resolution Time.

PDCCH skipping: the network device sends to the UE a sleep signaling (i.e., Go to sleep, GTS) for informing the UE that the PDCCH monitoring may be stopped for a period of time. The skip period for informing the UE to enter a sleep state may be based on a prior notification by the network device. Alternatively, the GTS may be referred to as the PDCCH skipping, which carries information associated with the skip period.

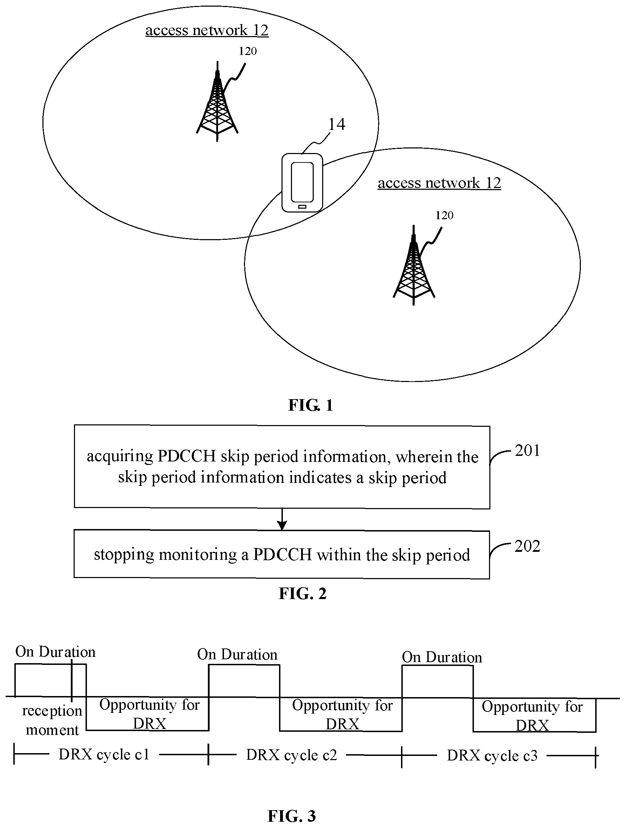

FIG. 1 illustrates a block diagram of a communication system according to an exemplary embodiment of the disclosure. The communication system may include: an access network 12 and a user equipment 14.

The access network 12 includes several network devices 120. The network device 120 may be a base station, which is a device deployed in the access network to provide a wireless communication function for the UE. The base station may include various forms of macro base stations, micro base stations, relay stations, access points and so on. In systems using different radio access technologies, the names of devices with base station functions may change. For example, in LTE systems, they are called eNodeBs or eNBs. In 5G NR systems, they are called gNodeBs or gNBs. As the communication technology evolves, the description of "base station" may change. For the convenience of description in the embodiments of the disclosure, the above devices for providing wireless communication functions for the UE 14 are collectively referred to as network devices.

The UE 14 may include various handheld devices, vehicle-mounted devices, wearable devices, computing devices, or other processing devices connected to wireless modems with wireless communication capabilities, as well as various forms of user equipment, mobile stations (MS), terminal devices and so on. For the convenience of description, the devices mentioned above are collectively referred to as UEs. The network device 120 and the UE 14 communicate with each other through a certain air interface technology, such as a Uu interface.

The technical solutions in the embodiments of the disclosure may be applied to various communication systems, such as: a global system of mobile communication (GSM), a code division multiple access (CDMA) system, a wideband code division multiple access (WCDMA) system, general packet radio service (GPRS), a long term evolution (LTE) system, a LTE frequency division duplex (FDD) system, a LTE time division duplex (TDD) system, an advanced long term evolution (LTE-A) system, a new radio (NR) system, an evolved system of the NR system, a LTE-based access to unlicensed spectrum system (LTE-U), a NR-U system, a universal mobile telecommunication system (UMTS), a worldwide interoperability for microwave access (WiMAX) communication system, wireless local area networks (WLAN), wireless fidelity (WiFi), next-generation communication systems or other communication systems.

Generally speaking, conventional communication systems support a limited number of connections and are easy to implement. However, with the development of communication technology, mobile communication systems may not only support conventional communication, but also support, for example, device to device (D2D) communication, machine to machine (M2M) communication, machine type communication (MTC), vehicle to vehicle (V2V) communication and vehicle to everything (V2X) systems, etc. The embodiments of the disclosure may also be applied to these communication systems.

FIG. 2 illustrates a schematic diagram of a method for power saving of a user equipment according to an exemplary embodiment of the disclosure, which may be applied to the UE shown in FIG. 1. The method includes the following steps at 201-202.

At 201, the UE acquires physical downlink control channel (PDCCH) skip period information, where the skip period information indicates a skip period.

During the above skip period, the UE skips active time in a first DRX cycle. The first DRX cycle is the 1st DRX cycle within the skip period. Alternatively, the first DRX cycle may be the 1st DRX cycle after a reception moment. Alternatively, the first DRX cycle may be a DRX cycle where the reception moment is located, that is, the currently applied DRX cycle.

Exemplarily, as shown in FIG. 3, three DRX cycles including the reception moment are shown. The DRX cycle c1 where the reception moment is located is the first DRX cycle, or the DRX cycle c2 after the reception moment is the first DRX cycle. Each DRX cycle includes On Duration time and Opportunity for DRX time. The skip period includes active time in the first DRX cycle.

Alternatively, the above reception moment may include a reception moment of a sleep signaling (i.e., Go To Sleep, GTS).

Alternatively, the above skip period is a fixed time length. Exemplarily, the fixed time length is greater than the length of the active time in the first DRX cycle. Exemplarily, the skip period is 5s, in which the length of the active time in the first DRX cycle is 1s, and the skip period is greater than the length of the active time.

Alternatively, the above skip period is the remaining time of the active time of the UE in the first DRX cycle. Exemplarily, when the active time of the first DRX cycle is 1s, the first DRX cycle is a DRX cycle that is currently running, and the first DRX cycle has been run to the 0.5s of the active time, then the skip period is the remaining 0.5s of the active time.

Alternatively, the above skip period is configured by the network device. Alternatively, in the process that the network device configures the skip period for the UE, the skip period is carried/included in at least one signaling of a downlink control information (DCI) signaling, a radio resource control (RRC) signaling, a medium access control control element (MAC CE) signaling. For example, in an alternative embodiment, the skip period may be a specific period of time configured by the network side, or a period of time that circulates in a specific period, during which the UE skips the active time of the first DRX cycle.

In some alternative embodiments, the network device notifies the UE to change the skip period through the DCI. In some other alternative embodiments, the network device notifies the UE that different skip periods are used in a DRX short cycle and a DRX long cycle through the RRC. In some other alternative embodiments, the network device notifies the UE that different skip periods are used in a DRX short cycle and a DRX long cycle through the MAC CE. In some other alternative embodiments, the network device informs the UE of the skip period in a MAC CE for activating a secondary component carrier.

Alternatively, the above skip period is a time period agreed in a communication protocol. For example, in an alternative embodiment, the network side sends a skip period activation instruction to the UE. After receiving the instruction, the UE determines that the skip period is a specific period agreed in the protocol or a time period that circulates in a specific period, during which the UE skips the active time in the first DRX cycle.

Alternatively, the UE further determines a parameter n, where the parameter n is used to indicate that the skip period is effective for n DRX cycles after the reception moment. The n DRX cycles include the first DRX cycle, where n is a positive integer. Alternatively, the above n DRX cycles include at least one of a short DRX cycle and a long DRX cycle.

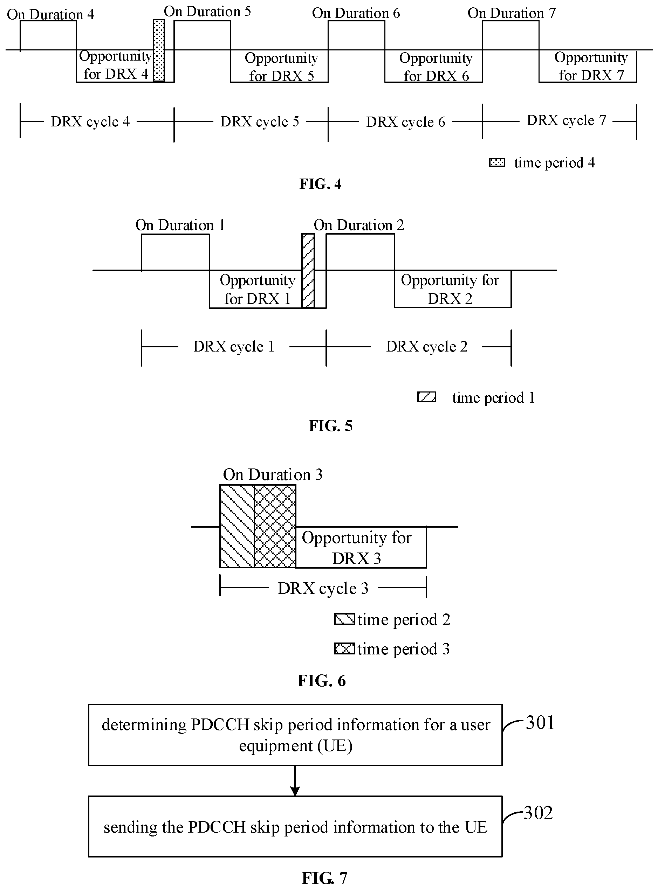

Exemplarily, the reception moment is a moment of receiving the GTS as an example. As shown in FIG. 4, the parameter n determined by the UE is 3. The UE receives the GTS in the time period 4 before the DRX cycle 5, and the above skip period includes 3 DRX cycles after the moment of receiving GTS. That is, the skip period is effective for 3 DRX cycles (i.e., DRX cycle 5, DRX cycle 6, and DRX cycle 7) after the reception moment.

In some alternative embodiments, when the network device determines that no data will be transmitted to the UE in the next period of time, the network device sends a GTS to the UE, for notifying the UE to stop monitoring the PDCCH according to the configured skip period or the skip period agreed in the communication protocol.

At 202, monitoring the PDCCH is stopped within the skip period.

The UE stops monitoring the PDCCH within the skip period. Alternatively, after receiving the GTS sent by the network device, the UE stops monitoring the PDCCH within the skip period. Exemplarily, after receiving the GTS sent by the network device, the UE selects a target skip period from the skip periods configured by the network device, and stops monitoring the PDCCH within the target skip period. Alternatively, after receiving the GTS sent by the network device, the UE selects a target skip period from the skip periods agreed in the communication protocol, and stops monitoring the PDCCH within the target skip period.

Alternatively, when the skip period is a fixed duration, the UE stops monitoring the PDCCH within the fixed duration, starting from the current DRX cycle or the next DRX cycle. Exemplarily, the reception moment is a moment of receiving a GTS as an example. As shown in FIG. 5, after receiving the GTS sent by the network device in the time period 1 of the Opportunity for DRX 1, the UE stops monitoring the PDCCH for the fixed duration, starting from the DRX cycle 2. That is, the UE stops monitoring the PDCCH for the fixed duration, starting from On Duration 2.

Alternatively, when the skip period is remaining time of the active time of the UE in the first DRX cycle, the UE stops monitoring the PDCCH within the above remaining time. Exemplarily, the reception moment is a moment of receiving a GTS as an example. As shown in FIG. 6, DRX cycle 3 includes On Duration 3 and Opportunity for DRX 3, On Duration 3 includes time period 2 and time period 3 in the active time, and the UE receives the GTS sent by the network device within the time period 2. Then, monitoring the PDCCH is stopped within the time period 3. That is, the UE immediately stops the running On Duration timer or the inactivity timer.

To sum up, in the method for power saving of a user equipment according to this embodiment, the UE acquires PDCCH skip period information, where the skip period information indicates the skip period, and stops monitoring the PDCCH within the skip period. Within the skip period, the UE skips the active time in the first DRX cycle, which effectively saves the power consumption of the UE. The method may also stop monitoring the PDCCH in the remaining time of the active time, so that the UE may stop monitoring the PDCCH without completing the PDCCH monitoring in the remaining time. The PDCCH monitoring by the UE is effectively controlled, and power consumption of the UE is further reduced.

In some alternative embodiments based on FIG. 2, the skip period may be configured for a length of the DRX cycle. Alternatively, the skip period includes: a first skip period and/or a second skip period. The first skip period is a skip period suitable for a DRX short cycle, the second skip period is a skip period suitable for a DRX long cycle, and the first skip period is different from the second skip period.

Alternatively, the first skip period is greater than the second skip period, that is, the skip period suitable for the DRX short cycle is greater than the skip period suitable for the DRX long cycle. Exemplarily, the short-cycle DRX and the long- cycle DRX are configured with different skip periods. As shown in Table 1, a duration from a1 to a2 is a first short cycle, and a skip period configured for the first short cycle is t1; a duration from b1 to b2 is a first long cycle, and a skip period configured for the first long cycle is t2.

**Table 1**

| Cycle duration | Cycle | Skip period |
|---|---|---|
| a1 to a2 | First short cycle | t1 |
| b1 to b2 | First long cycle | t2 |

Exemplarily, DRXs of different short cycles are configured with different skip periods, and DRXs of different long cycles are configured with different skip periods. As shown in Table 2, a duration from a1 to a2 is a first short cycle, a skip period configured for the first short cycle is t1; a duration from a3 to a4 is a second short cycle, and a skip period configured for the second short cycle is t3; a duration from b1 to b2 is a first long cycle, a skip period configured for the first long cycle is t2; a duration from b3 to b4 is a second long cycle, and the skip period configured for the second long cycle is t4.

**Table 2**

| Cycle duration | Cycle | Skip period |
|---|---|---|
| a1 to a2 | First short cycle | t1 |
| a3 to a4 | Second short cycle | t3 |
| b1 to b2 | First long cycle | t2 |
| B3 to b4 | Second long cycle | t4 |

Exemplarily, the DRX short cycles triggered by different reasons may be configured with different skip periods. Taking the different triggering reasons of the DRX short cycles as an example, the first DRX short cycle is triggered after the UE receives the MAC CE, and the configured skip period is t5. The second DRX short cycle is triggered after the inactivity timer of the UE expires, and the configured skip period is t6. The cycle durations of the first DRX short cycle and the second DRX short cycle may be the same or different, and t5 and t6 are different.

It should be noted that, in another situation, the network device may notify the UE that the above PDCCH skip period information is not used for the DRX long cycle. Alternatively, the second skip period is zero, that is, the second skip period suitable for the DRX long cycle is configured to be zero. The network device configures the second skip period to be zero. That is, it implicitly indicates that the above PDCCH skipping is not used for the DRX long cycle.

In another situation, the network device may notify the UE that the above PDCCH skip period information is not used for the DRX short cycle. Alternatively, the first skip period is zero, that is, the first skip period suitable for the DRX short cycle is configured to be zero. The network device configures the first skip period to be zero, that is, it implicitly indicates that the above PDCCH skipping is not used for the DRX short cycle.

To sum up, in the method for power saving of a UE according to this embodiment, the skip period is configured according to the length of the DRX cycle, where a longer skip period is configured for the DRX short cycle, so that more durations may be skipped for the DRX short cycle and the UE is more power-saving. In addition, the skip periods configured for the DRX short cycle and the DRX long cycle are different, so as to ensure reducing the delay to a minimum in the case of making the UE more power-saving.

In some alternative embodiments based on FIG. 2, the skip period may be configured for a primary component carrier (PCC) and a secondary component carrier (SCC), respectively. Alternatively, the skip period includes: a third skip period and/or a fourth skip period. The third skip period is a skip period suitable for a DRX cycle on the PCC, and the fourth skip period is a skip period suitable for a DRX cycle on the SCC. The third skip period is different from the fourth skip period. Exemplarily, the third skip period on the PCC is 3s, and the fourth skip period on the SCC is 6s.

Alternatively, the fourth skip period is greater than the third skip period, that is, compared with the third skip period on the PCC, a fourth skip period with a longer duration is used on the SCC, so that the UE may save more powers. Exemplarily, the fourth skip period is 5 seconds (5s), and the third skip period is 2s.

Alternatively, the fourth skip period is greater than the second skip period, where the second skip period is a skip period suitable for a DRX long cycle. That is, the skip period suitable for the DRX cycle on the SCC is greater than that of the DRX long cycle. Exemplarily, the fourth skip period is 6s, and the second skip period is 3s.

It should be noted that, in another situation, the PDCCH skipping that is notified by the network device to the UE is not used for the PCC. Alternatively, the third skip period is zero. The network device configures the third skip period to be zero. That is, it implicitly indicates that the above PDCCH skipping is not used for the PCC.

In another situation, the PDCCH skipping is configured to be performed by the UE that gets access to a designated secondary serving cell group (Scell group). That is, the UE is allowed to perform the PDCCH skipping after getting access to the designated Scell group, and does not need to perform the PDCCH skipping after getting access to a serving cell group rather than the designated Scell group.

To sum up, in the method for power saving of a user equipment according to this embodiment, the skip period is configured according to the PCC and SCC respectively, and the fourth skip period configured on the SCC is longer than the third skip period configured on the PCC. The duration for stopping monitoring on the SCC is longer, so that the UE may save more powers.

In some alternative embodiments based on FIG. 2, the skip period may be configured for carrier frequency bands, respectively. Alternatively, the skip period includes: a fifth skip period and/or a sixth skip period. The 5G frequency range (FR) is divided into FR1 (450MHz-6000MHz, also known as Sub-6GHz) and FR2 (24250MHz-52600MHz, also known as Above-6GHz or millimeter wave) according to the 3GPP definition. The fifth skip period is a skip period suitable for a DRX cycle in a DRX group of FR1 frequency band. The sixth skip period is a skip period suitable for a DRX cycle in a DRX group of FR2 frequency band. The fifth skip period is different from the sixth skip period.

Alternatively, the fifth skip period is smaller than the sixth skip period. That is, in a scenario where FR2 is used by the SCC, since the bandwidth on FR2 is larger and the data transmission is faster, a monitoring duration of the PDCCH on FR2 may be shorter than a monitoring duration of the PCC. The skip period of the DRX cycle suitable for the FR2 frequency band is larger than the skip period of the DRX cycle suitable for the FR1 frequency band. In the scenario where the FR2 is used by the SCC, the UE may also save more powers by using a larger skip period.

It should be noted that, in a situation, the network device informs the UE that the PDCCH skipping is not used for the DRX group on FR1. That is, the fifth skip period is zero. The network device configures the fifth skip period to be zero, that is, it implicitly indicates that the above PDCCH skipping is not used for the DRX group on FR1.

To sum up, in the method for power saving of a user equipment according to this embodiment, the skip period is configured according to the carrier frequency bands, and the skip periods configured in the FR1 and FR2 scenarios are different. In the scenario where the FR2 is used by the SCC, due to larger bandwidth and faster data transmission on FR2, the monitoring duration of the PDCCH on FR2 may be shorter than the monitoring duration in the FR1 scenario. Therefore, the fourth skip period configured on the SCC is longer than the second skip period. That is, the duration of stopping monitoring in the FR2 scenario is longer, so that the UE may save more powers.

FIG. 7 illustrates a schematic diagram of a method for power saving of a user equipment according to an exemplary embodiment of the disclosure, which may be applied to the network device shown in FIG. 1. The method includes the following steps at 301-302.

At 301, the network device determines PDCCH skip period information for the UE.

The above PDCCH skip period information indicates a skip period. Within the skip period, the UE skips active time in a first DRX cycle. The network device determines the skip period for the UE, and then determines the PDCCH skip period information.

It should be noted that, for the detailed content that the skip period is configured by the network device for the UE, reference may be made to the detailed description in the above embodiment on the UE side, which may not be repeated here.

At 302, the network device sends the PDCCH skip period information to theUE.

Alternatively, the skip period is carried in at least one of a downlink control information (DCI) signaling, a radio resource control (RRC) signaling, and a medium access control control element (MAC CE) signaling. That is, the network device enables the skip period to be carried in at least one of the DCI signaling, RRC signaling, and MAC CE signaling, and sends the PDCCH skip period information to the UE through the signaling.

Alternatively, the network device also configures a parameter n to the UE, where the parameter n is configured to indicate that the skip period is effective for n DRX cycles after a reception moment, and the n DRX cycles include the first DRX cycle, where n is a positive integer . As shown in FIG. 4, the network device configures the parameter 3 to the UE. When the reception moment is in a DRX cycle before the DRX cycle 5, the skip period takes effect for the DRX cycle 5, the DRX cycle 6, and the DRX cycle 7.

To sum up, in the method for power saving of a user equipment according to this embodiment, the network device configures the skip period for the UE, where the skip period includes the active time of the UE in the first DRX cycle, and controls the UE to stop monitoring the PDCCH within the skip period, which effectively saves the power consumption of the UE.

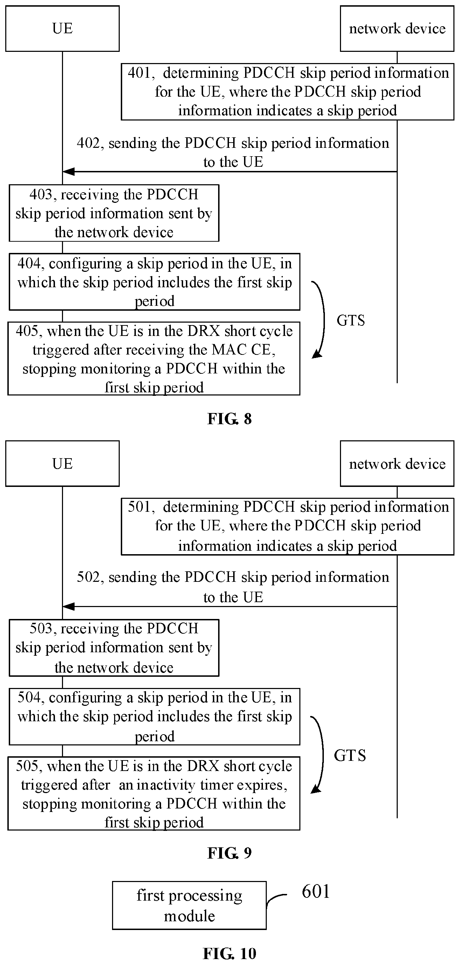

In some alternative embodiments, the above first skip period is a skip period for a DRX short cycle that is triggered after the UE receives the MAC CE. As shown in FIG. 8, which illustrates a schematic diagram of a method for power saving of a user equipment according to an exemplary embodiment of the disclosure. The method may be applied to the UE and the network device as shown in FIG. 1. The method includes the following steps at 401-405.

At 401, the network device determines PDCCH skip period information for the UE, where the PDCCH skip period information indicates a skip period.

The above skip period includes a first skip period. The first skip period is a skip period suitable for a DRX short cycle that is triggered after the UE receives the MAC CE.

Alternatively, the above skip period further includes a second skip period. The second skip period is a skip period suitable for a DRX long cycle. Alternatively, the second skip period is also a skip period suitable for the DRX short cycle that is not triggered after the UE receives the MAC CE.

The above first skip period is different from the second skip period of the DRX long cycle. Alternatively, the first skip period is greater than the second skip period. Exemplarily, the first skip period is 3s, and the second skip period is 1s.

At 402, the network device sends the PDCCH skip period information to the UE.

At 403, the UE receives the PDCCH skip period information sent by the network device.

At 404: a skip period is configured in the UE, and the skip period includes the first skip period.

The first skip period is configured in the UE. Alternatively, the second skip period is configured in the UE.

At 405, when the UE is in the DRX short cycle triggered after receiving the MAC CE, the UE stops monitoring a PDCCH within the first skip period.

It should be noted that, the UE is in the DRX short cycle triggered after receiving the MAC CE. At this time, it may be determined that the data transmission amount on the subsequent PDCCH is small, and the UE selects a longer first skip period to control the time of stopping monitoring the PDCCH. When the UE is in the DRX long cycle, or the DRX short cycle where the UE is located is not the DRX short cycle triggered after receiving the MAC CE, the UE selects the second skip period to control the time of stopping monitoring the PDCCH. The first skip period is greater than the second skip period.

Exemplarily, after the UE receives the GTS, when the UE is in the DRX short cycle triggered after receiving the MAC CE, the UE stops monitoring the PDCCH within the first skip period; when the UE is in the DRX long cycle, or the DRX short cycle where the UE is located is not the DRX short cycle triggered after receiving the MAC CE, the UE stops monitoring the PDCCH within the second skip period.

It should also be noted that, as an alternative implementation, the skip period may be agreed in a communication protocol.

To sum up, in the method for power saving of a user equipment according to this embodiment, the network device configures the skip period for the UE. After the UE receives the GTS, when the UE is in the DRX short cycle triggered after receiving the MAC CE, the UE selects to stop monitoring the PDCCH within the first skip period. That is, after the UE receives the MAC CE, it may be determined that the data transmission amount on the subsequent PDCCH is small, and using the first skip period longer than the second skip period of the DRX long cycle may make the UE more power-saving.

In some alternative embodiments, the above first skip period is a skip period for a DRX short cycle that is triggered after the inactivity timer of the UE expires. As shown in FIG. 9, which illustrates a schematic diagram of a method for power saving of a user equipment according to an exemplary embodiment of the disclosure. The method may be applied to the UE and the network device as shown in FIG. 1. The method includes the following steps at 501-505.

At 501, the network device determines PDCCH skip period information for the UE, where the PDCCH skip period information indicates a skip period.

The above skip period includes a first skip period. The first skip period is a skip period suitable for a DRX short cycle that is triggered after the UE receives the MAC CE.

Alternatively, the above skip period further includes a second skip period. The second skip period is a skip period suitable for a DRX long cycle. Alternatively, the second skip period is also a skip period suitable for the DRX short cycle that is not triggered after the UE receives the MAC CE.

The above first skip period is different from the second skip period of the DRX long cycle. Alternatively, the first skip period is smaller than the second skip period. Exemplarily, the skip period of the DRX short cycle is 2s, and the skip period of the DRX long cycle is 4s.

At 502, the network device sends the PDCCH skip period information to the UE.

At 503, the UE receives the PDCCH skip period information sent by the network device.

At 504: a skip period is configured in the UE, and the skip period includes the first skip period.

The first skip period is configured in the UE. Alternatively, the second skip period is configured in the UE.

At 505, when the UE is in the DRX short cycle triggered after an inactivity timer expires, the UE stops monitoring a PDCCH within the first skip period.

It should be noted that, when the UE is in the DRX short cycle triggered after the inactivity timer expires, it may be determined that the data transmission amount on the subsequent PDCCH is large, and the UE selects the first skip period with a shorter duration to control the time of stopping monitoring the PDCCH. When the UE is in the DRX long cycle, or the DRX short cycle where the UE is located is not the DRX short cycle triggered after the inactivity timer expires, the UE selects the second skip period to control the time of stopping monitoring the PDCCH. The first skip period is smaller than the second skip period.

Exemplarily, after the UE receives the GTS, when the UE is in the DRX short cycle triggered after the inactivity timer expires, the UE stops monitoring the PDCCH within the first skip period; when the UE is in the DRX long cycle, or the DRX short cycle where the UE is located is not the DRX short cycle triggered after the inactivity timer expires, the UE stops monitoring the PDCCH within the second skip period.

It should also be noted that, as an alternative implementation, the skip period may be agreed in a communication protocol.

To sum up, in the method for power saving of a user equipment according to this embodiment, the network device configures the skip period for the UE. After the UE receives the GTS, when the UE is in the DRX short cycle triggered after the inactivity timer expires, the UE selects to stop monitoring the PDCCH within the first skip period. That is, after the inactivity timer of the UE expires, it may be determined that the data transmission amount on the subsequent PDCCH is large, and using the first skip period smaller than the second skip period of the DRX long cycle may reduce the delay probability of data reception while the UE is more power-saving.

In the above embodiments, the steps performed by the network device may be implemented independently as embodiments on the network device side; and the steps performed by the UE may be implemented independently as embodiments on the UE side.

FIG. 10 illustrates a structural block diagram of an apparatus for power saving of a user equipment according to an exemplary embodiment of the disclosure. The apparatus may be implemented as a UE, or may be implemented as a part of the UE. The apparatus includes a first processing module 601.

The first processing module 601 is configured to acquire physical downlink control channel (PDCCH) skip period information and stop monitoring a PDCCH within the skip period. The skip period information indicates a skip period, and the UE skips active time in a first discontinuous reception (DRX) cycle within the skip period.

In some alternative embodiments, the skip period is of a fixed time length; or the skip period is remaining time of the active time for the UE in the first DRX cycle; or the skip period is a time period configured by the network device; or the skip period is a time period agreed in a communication protocol.

In some alternative embodiments, the skip period includes: a first skip period and/or a second skip period. The first skip period is a skip period suitable for a DRX short cycle, and the second skip period is a skip period suitable for a DRX long cycle. The first skip period and the second skip period are different.

In some alternative embodiments, the first skip period is greater than the second skip period; or the first skip period is zero; or the second skip period is zero.

In some alternative embodiments, the first skip period is a skip period for the DRX short cycle that is triggered after the UE receives medium access control control element (MAC CE); or the first skip period is a skip period for the DRX short cycle that is triggered after an inactivity timer of the UE expires.

In some alternative embodiments, the skip period includes: a third skip period and/or a fourth skip period. The third skip period is a skip period suitable for a DRX cycle on a primary component carrier (PCC). The fourth skip period is a skip period suitable for a DRX cycle on a secondary component carrier (SCC). The third skip period is different from the fourth skip period.

In some alternative embodiments, the fourth skip period is greater than the third skip period; or the third skip period is zero.

In some alternative embodiments, the skip period includes: a fifth skip period and/or a sixth skip period. The fifth skip period is a skip period suitable for a DRX cycle in a DRX group of FR1 frequency band. The sixth skip period is a skip period suitable for a DRX cycle in a DRX group of FR2 frequency band. The fifth skip period is different from the sixth skip period.

In some alternative embodiments, the fifth skip period is smaller than the sixth skip period; or the fifth skip period is zero.

In some alternative embodiments, the skip period is carried in at least one of a downlink control information (DCI) signaling, a radio resource control (RRC) signaling, and a medium access control control element (MAC CE) signaling.

In some alternative embodiments, the first processing module 601 is further configured to determine a parameter n, where the parameter n is configured to indicate that the skip period is effective for n DRX cycles after a reception moment, and the n DRX cycles include the first DRX cycle, where n is a positive integer.

To sum up, in the apparatus for power saving of a user equipment according to this embodiment, the apparatus acquires the PDCCH skip period information, where the skip period information indicates the skip period. The monitoring of the PDCCH is stopped within the skip period. The UE skips active time in the first DRX cycle within the skip period, which effectively saves the power consumption of the UE.

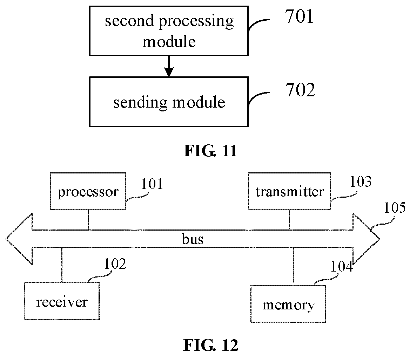

FIG. 11 illustrates a structural block diagram of an apparatus for power saving of a UE according to an exemplary embodiment of the disclosure. The apparatus may be implemented as a network device, or may be implemented as a part of the network device, and the device includes a second processing module 701 and a sending module 702.

The second processing module 701 is configured to determine physical downlink control channel (PDCCH) skip period information for the UE, where the skip period information indicates a skip period; and the UE skips active time in a first discontinuous reception (DRX) cycle within the skip period.

The sending module 702 is configured to send the PDCCH skip period information to the UE.

In some alternative embodiments, the skip period is of a fixed time length; or the skip period is remaining time of the active time for the UE in the first DRX cycle; or the skip period is a time period configured by the network device; or the skip period is a time period agreed in a communication protocol.

In some alternative embodiments, the skip period includes: a first skip period and/or a second skip period. The first skip period is a skip period suitable for a DRX short cycle, and the second skip period is a skip period suitable for a DRX long cycle. The first skip period and the second skip period are different.

In some alternative embodiments, the first skip period is greater than the second skip period; or the first skip period is zero; or the second skip period is zero.

In some alternative embodiments, the first skip period is a skip period for the DRX short cycle that is triggered after the UE receives medium access control control element (MAC CE); or the first skip period is a skip period for the DRX short cycle that is triggered after an inactivity timer of the UE expires.

In some alternative embodiments, the skip period includes: a third skip period and/or a fourth skip period. The third skip period is a skip period suitable for a DRX cycle on a primary component carrier (PCC). The fourth skip period is a skip period suitable for a DRX cycle on a secondary component carrier (SCC). The third skip period is different from the fourth skip period.

In some alternative embodiments, the fourth skip period is greater than the third skip period; or the third skip period is zero.

In some alternative embodiments, the skip period includes: a fifth skip period and/or a sixth skip period. The fifth skip period is a skip period suitable for a DRX cycle in a DRX group of FR1 frequency band. The sixth skip period is a skip period suitable for a DRX cycle in a DRX group of FR2 frequency band. The fifth skip period is different from the sixth skip period.

In some alternative embodiments, the fifth skip period is smaller than the sixth skip period; or the fifth skip period is zero.

In some alternative embodiments, the skip period is carried in at least one of a downlink control information (DCI) signaling, a radio resource control (RRC) signaling, and a medium access control control element (MAC CE) signaling.

In some alternative embodiments, the sending module 702 configures a parameter n for the UE, where the parameter n is configured to indicate that the skip period is effective for n DRX cycles after a reception moment, and the n DRX cycles include the first DRX cycle, where n is a positive integer.

To sum up, in the apparatus for power saving of a user equipment according to this embodiment, the apparatus configures a skip period for the UE, and the skip period includes the active time of the UE in the first DRX cycle. The apparatus controls the UE to stop monitoring the PDCCH within the skip period, which effectively saves the power consumption of the UE.

FIG. 12 illustrates a structural schematic diagram of a communication device (user equipment or network device) according to an exemplary embodiment of the disclosure. The communication device includes a processor 101, a receiver 102, a transmitter 103, a memory 104 and a bus 105.

The processor 101 includes one or more processing cores, and the processor 101 executes various functional applications and information processing by running software programs and modules.

The receiver 102 and the transmitter 103 may be implemented as a communication component, which may be a communication chip.

The memory 104 is connected to the processor 101 through the bus 105.

The memory 104 may be configured to store at least one instruction, and the processor 101 may be configured to execute the at least one instruction, so that various steps in the foregoing method embodiments are implemented.

Additionally, the memory 104 may be implemented by any type of volatile or non-volatile storage devices or their combination. The volatile or non-volatile storage devices include but not limited to, magnetic or optical disks, an electrically erasable programmable read only memory (EEPROM), an erasable programmable read only memory (EPROM), a static random access memory (SRAM), a read only memory (ROM), a magnetic memory, a flash memory, a programmable read-only memory (PROM).

In an exemplary embodiment, a computer-readable storage medium is also provided. The computer-readable storage medium stores at least one piece of instruction, at least one piece of program, a code set or an instruction set, which are loaded and executed by the processor. As such, the method for power saving of a user equipment according to the above method embodiments and executed by the communication device is implemented.

Those skilled in the art may understand that, all or part of the steps of implementing the above embodiments may be accomplished by hardware, or may be accomplished by instructing related hardware through programs, and the program may be stored in a computer-readable storage medium. The storage medium mentioned may be a read-only memory, a magnetic disk or an optical disk, etc.

The above descriptions are only alternative embodiments of the disclosure, and are not intended to limit the disclosure. Any modifications, equivalent replacements, improvements, etc. made within the spirit and principles of the disclosure shall be included within the protection range of the disclosure.

## Claims

1. A method for power saving of a user equipment (LTE), applied to the LTE, the method comprising:
acquiring physical downlink control channel (PDCCH) skip period information, wherein the skip period information indicates a skip period, and the UE skips active time in a first discontinuous reception (DRX) cycle within the skip period; and
stopping monitoring a PDCCH within the skip period.

2. The method as claimed in claim 1, wherein
the skip period is of a fixed time length; or
the skip period is remaining time of the active time for the LTE in the first DRX cycle; or
the skip period is a time period configured by the network device; or
the skip period is a time period agreed in a communication protocol.

3. The method as claimed in claim 1, wherein the skip period comprises: a first skip period and/or a second skip period;
wherein the first skip period is a skip period suitable for a DRX short cycle, the second skip period is a skip period suitable for a DRX long cycle, the first skip period is different from the second skip period.

4. The method as claimed in claim 3, wherein:
the first skip period is greater than the second skip period; or
the first skip period is zero; or
the second skip period is zero.

5. The method as claimed in claim 3, wherein:
the first skip period is a skip period for the DRX short cycle that is triggered after the UE receives medium access control control element (MAC CE); or
the first skip period is a skip period for the DRX short cycle that is triggered after an inactivity timer of the UE expires.

6. The method as claimed in claim 1, wherein the skip period comprises: a third skip period and/or a fourth skip period;
the third skip period is a skip period suitable for a DRX cycle on a primary component carrier (PCC), the fourth skip period is a skip period suitable for a DRX cycle on a secondary component carrier (SCC), and the third skip period is different from the fourth skip period.

7. The method as claimed in claim 6, wherein:
the fourth skip period is greater than the third skip period; or
the third skip period is zero.

8. The method as claimed in claim 1, wherein the skip period comprises: a fifth skip period and/or a sixth skip period;
the fifth skip period is a skip period suitable for a DRX cycle in a DRX group of FR1 frequency band, the sixth skip period is a skip period suitable for a DRX cycle in a DRX group of FR2 frequency band, and the fifth skip period is different from the sixth skip period.

9. The method as claimed in claim 8, wherein:
the fifth skip period is smaller than the sixth skip period; or
the fifth skip period is zero.

10. The method as claimed in any one of claims 1 to 9, wherein the skip period is carried in at least one of a downlink control information (DCI) signaling, a radio resource control (RRC) signaling, and a medium access control control element (MAC CE) signaling.

11. The method as claimed in any one of claims 1 to 9, further comprising:
determining a parameter n, wherein the parameter n is configured to indicate that the skip period is effective for n DRX cycles after a reception moment, and the n DRX cycles include the first DRX cycle, where n is a positive integer.

12. A method for power saving of a user equipment (UE), applied to a network device, the method comprising:
determining physical downlink control channel (PDCCH) skip period information for the UE, wherein the skip period information indicates a skip period; and the UE skips active time in a first discontinuous reception (DRX) cycle within the skip period;
sending the PDCCH skip period information to the UE.

13. The method as claimed in claim 12, wherein:
the skip period is of a fixed time length; or
the skip period is remaining time of the active time of the LTE in the first DRX cycle; or
the skip period is a time period configured by the network device; or
the skip period is a time period agreed in a communication protocol.

14. The method as claimed in claim 12, wherein the skip period comprises: a first skip period and/or a second skip period;
wherein the first skip period is a skip period suitable for a DRX short cycle, the second skip period is a skip period suitable for a DRX long cycle, the first skip period is different from the second skip period.

15. The method as claimed in claim 14, wherein:
the first skip period is greater than the second skip period; or
the first skip period is zero; or
the second skip period is zero.

16. The method as claimed in claim 14, wherein:
the first skip period is a skip period for the DRX short cycle that is triggered after the UE receives medium access control control element (MAC CE); or
the first skip period is a skip period for the DRX short cycle that is triggered after an inactivity timer of the UE expires.

17. The method as claimed in claim 12, wherein the skip period comprises: a third skip period and/or a fourth skip period;
the third skip period is a skip period suitable for a DRX cycle on a primary component carrier (PCC), the fourth skip period is a skip period suitable for a DRX cycle on a secondary component carrier (SCC), and the third skip period is different from the fourth skip period.

18. The method as claimed in claim 17, wherein:
the fourth skip period is greater than the third skip period; or
the third skip period is zero.

19. The method as claimed in claim 12, wherein the skip period comprises: a fifth skip period and/or a sixth skip period;
the fifth skip period is a skip period suitable for a DRX cycle in a DRX group of FR1 frequency band, the sixth skip period is a skip period suitable for a DRX cycle in a DRX group of FR2 frequency band, and the fifth skip period is different from the sixth skip period.

20. The method as claimed in claim 19, wherein:
the fifth skip period is smaller than the sixth skip period; or
the fifth skip period is zero.

21. The method as claimed in any one of claims 12 to 20, wherein the skip period is carried in at least one of a downlink control information (DCI) signaling, a radio resource control (RRC) signaling, and a medium access control control element (MAC CE) signaling.

22. The method as claimed in any one of claims 12 to 20, wherein,
configuring a parameter n to the UE, wherein the parameter n is configured to indicate that the skip period is effective for n DRX cycles after a reception moment, and the n DRX cycles include the first DRX cycle, where n is a positive integer.

23. An apparatus for power saving of a user equipment (LTE), comprising:
a first processing module, configured to acquire physical downlink control channel (PDCCH) skip period information, wherein the skip period information indicates a skip period, and the UE skips active time in a first discontinuous reception (DRX) cycle within the skip period; and stop monitoring a PDCCH within the skip period.

24. The apparatus as claimed in claim 23, wherein:
the skip period is of a fixed time length; or
the skip period is remaining time of the active time for the LTE in the first DRX cycle; or
the skip period is a time period configured by the network device; or
the skip period is a time period agreed in a communication protocol.

25. The apparatus as claimed in claim 23, wherein the skip period comprises: a first skip period and/or a second skip period;
wherein the first skip period is a skip period suitable for a DRX short cycle, the second skip period is a skip period suitable for a DRX long cycle, the first skip period is different from the second skip period.

26. The apparatus as claimed in claim 25, wherein:
the first skip period is greater than the second skip period; or
the first skip period is zero; or
the second skip period is zero.

27. The apparatus as claimed in claim 25, wherein:
the first skip period is a skip period for the DRX short cycle that is triggered after the UE receives medium access control control element (MAC CE); or
the first skip period is a skip period for the DRX short cycle that is triggered after an inactivity timer of the UE expires.

28. The apparatus as claimed in claim 23, wherein the skip period comprises: a third skip period and/or a fourth skip period;
the third skip period is a skip period suitable for a DRX cycle on a primary component carrier (PCC), the fourth skip period is a skip period suitable for a DRX cycle on a secondary component carrier (SCC), and the third skip period is different from the fourth skip period.

29. The apparatus as claimed in claim 28, wherein:
the fourth skip period is greater than the third skip period; or
the third skip period is zero.

30. The apparatus as claimed in claim 23, wherein the skip period comprises: a fifth skip period and/or a sixth skip period;
the fifth skip period is a skip period suitable for a DRX cycle in a DRX group of FR1 frequency band, the sixth skip period is a skip period suitable for a DRX cycle in a DRX group of FR2 frequency band, and the fifth skip period is different from the sixth skip period.

31. The apparatus as claimed in claim 30, wherein:
the fifth skip period is smaller than the sixth skip period; or
the fifth skip period is zero.

32. The apparatus as claimed in any one of claims 23 to 31, wherein the skip period is carried in at least one of a downlink control information (DCI) signaling, a radio resource control (RRC) signaling, and a medium access control control element (MAC CE) signaling.

33. The apparatus as claimed in any one of claims 23 to 31, wherein the first processing module is further configured to:
determine a parameter n, wherein the parameter n is configured to indicate that the skip period is effective for n DRX cycles after a reception moment, and the n DRX cycles include the first DRX cycle, where n is a positive integer.

34. An apparatus for power saving of a user equipment (UE), applied to a network device, the apparatus comprising:
a second processing module, configured to determine physical downlink control channel (PDCCH) skip period information for the UE, wherein the skip period information indicates a skip period; and the UE skips active time in a first discontinuous reception (DRX) cycle within the skip period; and
a sending module, configured to send the PDCCH skip period information to the UE.

35. The apparatus as claimed in claim 34, wherein:
the skip period is of a fixed time length; or
the skip period is remaining time of the active time of the LTE in the first DRX cycle; or
the skip period is a time period configured by the network device; or
the skip period is a time period agreed in a communication protocol.

36. The apparatus as claimed in claim 34, wherein the skip period comprises: a first skip period and/or a second skip period;
wherein the first skip period is a skip period suitable for a DRX short cycle, the second skip period is a skip period suitable for a DRX long cycle, the first skip period is different from the second skip period.

37. The apparatus as claimed in claim 36, wherein:
the first skip period is greater than the second skip period; or
the first skip period is zero; or
the second skip period is zero.

38. The apparatus as claimed in claim 36, wherein:
the first skip period is a skip period for the DRX short cycle that is triggered after the UE receives medium access control control element (MAC CE); or
the first skip period is a skip period for the DRX short cycle that is triggered after an inactivity timer of the UE expires.

39. The apparatus as claimed in claim 34, wherein the skip period comprises: a third skip period and/or a fourth skip period;
the third skip period is a skip period suitable for a DRX cycle on a primary component carrier (PCC), the fourth skip period is a skip period suitable for a DRX cycle on a secondary component carrier (SCC), and the third skip period is different from the fourth skip period.

40. The apparatus as claimed in claim 39, wherein
the fourth skip period is greater than the third skip period; or
the third skip period is zero.

41. The apparatus as claimed in claim 34, wherein the skip period comprises: a fifth skip period and/or a sixth skip period;
the fifth skip period is a skip period suitable for a DRX cycle in a DRX group of FR1 frequency band, the sixth skip period is a skip period suitable for a DRX cycle in a DRX group of FR2 frequency band, and the fifth skip period is different from the sixth skip period.

42. The apparatus as claimed in claim 41, wherein
the fifth skip period is smaller than the sixth skip period; or
the fifth skip period is zero.

43. The apparatus as claimed in any one of claims 34 to 42, wherein the skip period is carried in at least one of a downlink control information (DCI) signaling, a radio resource control (RRC) signaling, and a medium access control control element (MAC CE) signaling.

44. The apparatus as claimed in any one of claims 34 to 42, wherein the sending module is further configured to:
configure a parameter n to the UE, wherein the parameter n is configured to indicate that the skip period is effective for n DRX cycles after a reception moment, and the n DRX cycles include the first DRX cycle, where n is a positive integer.

45. A user equipment, comprising:
a processor;
a transceiver connected to the processor; and
a memory for storing instructions executable by the processor;
wherein when the processor is configured to load and execute the instructions, the method for power saving of the user equipment is implemented according to any one of claims 1 to 11.

46. A network device, comprising:
a processor;
a transceiver connected to the processor; and
a memory for storing instructions executable by the processor;
wherein when the processor is configured to load and execute the instructions, the method for power saving of a user equipment is implemented according to any one of claims 12 to 22.

47. A computer-readable storage medium having executable instructions stored thereon, wherein when the processor is configured to load and execute the instructions, the method for power saving of a user equipment is implemented according to any one of claims 1 to 22.
